# EUROPÄISCHE PATENTSCHRIFT

(11) **EP 3 491 239 B1**
(45) Veröffentlichungstag und Bekanntmachung des Hinweises auf die Patenterteilung: **11.06.2025**
(21) Anmeldenummer: 17748692.5
(22) Anmeldetag: 25.07.2017
(51) Int. Cl.: F03D 13/20, E04H 12/08, E04H 12/34

(54) **VERBINDUNGSELEMENT ZUM VERBINDEN VON TURMABSCHNITTEN, TURMABSCHNITT, TURM, WINDENERGIEANLAGE SOWIE VERFAHREN ZUM HERSTELLEN EINES TURMABSCHNITTS UND ZUM VERBINDEN VON TURMABSCHNITTEN**
CONNECTING ELEMENT FOR CONNECTING TOWER PORTIONS, TOWER PORTION, TOWER, WIND TURBINE, AND METHOD FOR PRODUCING A TOWER PORTION AND FOR CONNECTING TOWER PORTIONS
ÉLÉMENT DE RACCORDEMENT PERMETTANT DE RACCORDER DES SECTIONS DE TOUR, SECTION DE TOUR, TOUR, ÉOLIENNE AINSI QUE PROCÉDÉ DE FABRICATION D'UNE SECTION DE TOUR ET DE RACCORDEMENT DE SECTIONS DE TOUR

(30) Priorität: 29.07.2016 DE 102016114114
(43) Veröffentlichungstag der Anmeldung: 05.06.2019
(73) Patentinhaber: Wobben Properties GmbH, 26607 Aurich (DE)
(72) Erfinder: MTAUWEG, Samer, 27568 Bremerhaven (DE); BOETTCHER, Bernd, 26607 Aurich (DE); LONGERU, Markus, 21684 Stade (DE)
(74) Vertreter: Eisenführ Speiser
(86) Internationale Anmeldenummer: PCT/EP2017/068764
(87) Internationale Veröffentlichungsnummer: WO 2018/019832

(56) Entgegenhaltungen:
- EP-A1- 1 889 987
- EP-A1- 2 816 177
- WO-A1-00/49249
- WO-A1-2011/091799
- WO-A1-2013/097865
- WO-A1-2016/091499
- KR-A- 20120 073 785
- US-A1- 2006 213 145
- US-A1- 2011 138 729

## Beschreibung

Die Erfindung betrifft ein Verbindungselement zum Verbinden von Turmabschnitten eines Turmes einer Windenergieanlage. Ferner betrifft die Erfindung einen Turmabschnitt eines Turmes einer Windenergieanlage, einen Teil eines Turmes einer Windenergieanlage, einen Turm einer Windenergieanlage und eine Windenergieanlage. Die Erfindung betrifft ferner ein Verfahren zum Herstellen eines Turmabschnitts eines Turmes einer Windenergieanlage sowie ein Verfahren zum Verbinden von Turmabschnitten eines Turmes einer Windenergieanlage.

Turmabschnitte eines Turms, insbesondere eines Stahlturms, einer Windenergieanlage werden üblicherweise über Verbindungsflansche miteinander verbunden. Solche Verbindungsflansche zum Anbringen an ein Ende eines Turmabschnitts sind beispielsweise bekannt aus der DE 101 26 049 A1 oder der DE 103 25 032 B3. Die Herstellung und der Transport von ringförmigen Verbindungsflanschen sind jedoch aufwendig und teuer, insbesondere für große Durchmesser, wie sie sich gerade am unteren Ende von Türmen großer Höhe finden. Ferner ist auch eine Verbesserung der Zuverlässigkeit und/oder der Tragfähigkeit der Verbindung wünschenswert.

Das Deutsche Patent- und Markenamt hat in der Prioritätsanmeldung zu vorliegender Anmeldung folgenden Stand der Technik recherchiert: DE 10 2010 025 840 A1. Die WO 2013/097865 A1 offenbart ein Ringsegment für einen Flansch zum Anordnen eines Turmsegments an ein anderes Turmsegment. Die US 2006/0213145 A1 beschreibt einen gitterförmigen Turm für eine Windenergieanlage. Die KR 2012 0073785 A lehrt einen Turm für eine Windenergieanlage mit einer spezifischen Ausgestaltung des Turmkopfes.

Es ist daher eine Aufgabe der vorliegenden Erfindung, ein Verbindungselement zum Verbinden von Turmabschnitten, einen Turmabschnitt, einen Teil eines Turmes, einen Turm und eine Windenergieanlage sowie ein Verfahren zum Herstellen eines Turmabschnitts und ein Verfahren zum Verbinden von Turmabschnitten anzugeben, welche einen oder mehrere Nachteile existierender Lösungen verringern oder beseitigen. Es ist ferner eine Aufgabe der vorliegenden Erfindung, ein Verbindungselement zum Verbinden von Turmabschnitten, einen Turmabschnitt, einen Teil eines Turmes, einen Turm und eine Windenergieanlage sowie ein Verfahren zum Herstellen eines Turmabschnitts und ein Verfahren zum Verbinden von Turmabschnitten anzugeben, welche die Zuverlässigkeit und/oder die Tragfähigkeit der Verbindung von Turmabschnitten verbessern.

Beschrieben wird ein Verbindungselement zum Verbinden von Turmabschnitten eines Turmes einer Windenergieanlage, umfassend eine Befestigungsfläche, die die Form eines Segments einer Umfangsfläche des Turms aufweist, und ausgebildet ist, an einer Umfangsfläche eines Turmabschnitts angeordnet zu werden, eine zur Befestigungsfläche in einem Winkel angeordnete Verbindungsfläche, die Aufnahmen zur Aufnahme von Befestigungselementen aufweist.

Das Verbindungselement weist eine Befestigungsfläche auf, die an einer Umfangsfläche eines Turmabschnitts, insbesondere eines Stahlturms, angeordnet werden kann. Ferner weist das erfindungsgemäße Verbindungselement eine Form auf, die einem Segment einer Umfangsfläche des Turms entspricht. Vorzugsweise entspricht die Befestigungsfläche somit im Wesentlichen der Geometrie eines Teils der Umfangsfläche des Turmabschnitts. Wenn der Turmabschnitt im Wesentlichen rohrförmig und/oder hohlzylinderförmig ausgebildet ist, weist die Befestigungsfläche somit vorzugsweise eine Form eines Mantelsegments eines Zylinders auf. Wenn der Turmabschnitt im Wesentlichen kegelstumpfförmig ausgebildet ist, weist die Befestigungsfläche somit vorzugsweise die Form eines Mantelsegments eines Kegels, insbesondere eines Kegelstumpfs, auf. Wenn der Turmabschnitt polygonförmig ausgebildet ist, weist die Befestigungsfläche somit vorzugsweise eine eben flächige Erstreckung auf, die einer Umfangsflächen einer der Seiten des polygonförmigen Turmabschnitts entspricht.

Die Form der Befestigungsfläche als Segment einer Umfangsfläche des Turms bezieht sich insbesondere auf ein Segment in Umfangsrichtung des Turms, was insbesondere bedeutet, dass die Befestigungsfläche eines einzelnen Verbindungselements keinen Ring, insbesondere keinen Kreisring oder Polygon bildet, sondern die Umfangsfläche eines Turmabschnitts lediglich zu einem Teil seines Umfangs bedeckt.

Die Befestigungsfläche kann eben ausgebildet sein, insbesondere nicht gekrümmt, oder einen Radius aufweisen, wobei dieser Radius ferner vorzugsweise dem Radius der Umfangsfläche des Turmabschnitts entspricht oder geringfügig kleiner ist als dieser. Insbesondere, wenn die Befestigungsfläche die Form eines Mantelsegments eines Kegels aufweist, kann sich dieser Radius in einer im Einbauzustand vertikalen Richtung verändern, insbesondere nach oben verjüngen.

Türme von Windenergieanlagen weisen in der Regel im Einbauzustand und im Betriebszustand eine vertikale Längsachse auf und einen ringförmigen Querschnitt orthogonal zu dieser Längsachse. Dieser ringförmige Querschnitt kann kreisringförmig ausgebildet sein oder auch eine polygonale Form aufweisen. Unter dem Begriff ringförmig wird daher in dieser Anmeldung nicht nur eine kreisringförmige Ausgestaltung verstanden, sondern auch eine polygonale und/oder mehreckige Ausgestaltung mit mehreren geraden Abschnitten.

Sofern hier auf den Turmabschnitt und das Verbindungselement in Relation zum Turmabschnitt Bezug genommen wird, bezieht sich dies insbesondere auf den Einbauzustand des Verbindungselements, in dem das Verbindungselement an der Umfangsfläche des Turmabschnitts angeordnet ist. Insbesondere beziehen sich Richtungsangaben wie beispielsweise radial, tangential, in Umfangsrichtung, etc. vorzugsweise auf einen Turm, insbesondere auf eine im Wesentlichen vertikale Längsachse eines Turms, und beziehen sich auf jegliche Querschnittsformen eines solchen Turmes, insbesondere sowohl auf kreisringförmige Querschnitte als auch auf polygonale Querschnitte. Ferner vorzugsweise beziehen sich auch Angaben wie horizontal, vertikal, unten, oben, etc. ebenfalls auf den Einbauzustand eines Verbindungselements an einem Turmabschnitt in einem Turm einer Windenergieanlage.

Ein Turmabschnitt wird hier verstanden als ein ringförmiges Element, das einen kreisringförmigen oder einen polygonalen Querschnitt aufweisen kann. Ein Turmabschnitt mit einem kreisringförmigen Querschnitt kann beispielsweise die äußere Form eines Zylinders oder Kegelstumpfs (insbesondere bei sich verjüngenden Türmen) aufweisen.

Ein Turm umfasst mehrere, im Einbauzustand und im Betriebszustand der Windenergieanlage vertikal übereinander angeordnete, Turmabschnitte. Als Einbauzustand wird hier insbesondere ein Zustand verstanden, der sich auf den vertikal ausgerichteten Turm bezieht, der - sofern auf dem Turm eine entsprechend betriebsbereite Gondel mit Rotor angeordnet ist - auch dem Betriebszustand der Windenergieanlage entspricht. Eine im Wesentlichen horizontale Ausrichtung der Längsachse, z.B. bei der Fertigung und/oder beim Transport des Turms oder Teilen davon, ist hier nicht mit Einbauzustand gemeint. Die für den Einbauzustand beschriebenen Ausrichtungen sind im Fertigungs- und/oder Transportzustand entsprechend an die temporär nicht vertikal ausgerichtete Längsachse des Turms bzw. eines Teils davon anzupassen.

Türme von Windenergieanlagen verjüngen sich in der Regel von ihrer unteren zu ihrem oberen Ende. Die Ausrichtung der Turmwand eines sich verjüngenden Turms weicht in der Regel nur um wenige Grad von der Vertikalen ab. Wenn in dieser Anmeldung auf Ausrichtungen, insbesondere im Einbauzustand, Bezug genommen wird, wie beispielsweise oben, unten, radial, horizontal, vertikal, etc., soll dies daher entsprechend auch für sich verjüngende Türme und dementsprechend leicht gegenüber der Vertikalen geneigte Turmwände gelten.

Verschiedene Bauweisen für Türme von Windenergieanlagen sind bekannt. Insbesondere haben sich Türme in Massivbauweise, aus Beton und/oder Stahlbeton und/oder Spannbeton und/oder Stahl durchgesetzt. Die hier vorliegende Erfindung bezieht sich insbesondere auf Türme in Stahlbauweise oder Teile von Türmen in Stahlbauweise, bei denen die Verbindungselemente an Turmabschnitten aus Stahl befestigt werden können, insbesondere angeschweißt werden können. Verbindungselemente können jedoch auch an Turmabschnitten aus Beton und/oder Stahlbeton und/oder Spannbeton befestigt werden, beispielsweise indem Teile der Verbindungselemente einbetoniert werden.

Die Befestigungsfläche dient insbesondere dazu, das Verbindungselement an einem Turmabschnitt anzubringen bzw. zu befestigen. Insbesondere kann hierzu auch eine im Wesentlichen linienförmige Befestigung erfolgen, insbesondere an einer im Einbauzustand des Verbindungselements oberen und/oder unteren Kante der Befestigungsfläche.

Neben der Befestigungsfläche weist das Verbindungselement eine winklig zur Befestigungsfläche angeordnete Verbindungsfläche auf. Die Anordnung der Befestigungsfläche und der Verbindungsfläche in einem Winkel zueinander bedeutet insbesondere, dass die beiden Flächen nicht in derselben Ebene liegen. Bei einem Verbindungselement, dessen Befestigungsfläche die Form eines Mantelsegments eines Zylinders aufweist oder eben ausgebildet ist, kann die Verbindungsfläche vorzugsweise orthogonal zur Befestigungsfläche ausgerichtet sein. Bei einem Verbindungselement, das für einen sich verjüngenden Turmabschnitt vorgesehen ist, dessen Befestigungsfläche beispielsweise die Form eines Mantelsegments eines Kegels aufweist oder eben ausgebildet ist, kann die Verbindungsfläche vorzugsweise auch in einem von 90° abweichenden Winkel, beispielsweise in einem Winkel von 60° bis 90°, zur Befestigungsfläche ausgerichtet sein.

Die in der Verbindungsfläche angeordneten Aufnahmen dienen zur Aufnahme von Befestigungselementen. Insbesondere ist bevorzugt, dass die Aufnahmen angeordnet und ausgebildet sind, Befestigungselemente aufzunehmen, die in Aufnahmen einer Verbindungsfläche eines weiteren, an einem weiteren Turmabschnitt angeordneten, Verbindungselements angeordnet sind.

Ein besonderer Vorteil des Verbindungselements ist es, dass auf die Ausbildung eines ringförmigen, insbesondere kreisringförmigen, Flansches verzichtet werden kann. Die Erstreckung eines Verbindungselements in Umfangsrichtung des Turmabschnitts entspricht vorzugsweise weniger als 360 Bogengrad, insbesondere weniger als 180 Bogengrad, vorzugsweise weniger als 90 Bogengrad. Eine Erstreckung des Verbindungselements in Umfangsrichtung des Turmabschnitts entspricht weniger als 60 Bogengrad. Insbesondere kann die Erstreckung des Verbindungselements in Umfangsrichtung des Turmabschnitts weniger als 45 Bogengrad, beispielsweise weniger als 30 Bogengrad, bevorzugt sein.

Solche einzelnen Verbindungselemente können deutlich kostengünstiger hergestellt und/oder transportiert werden als ringförmige, insbesondere kreisringförmige, Verbindungsflansche. Ferner können solche einzelnen Verbindungselemente auch kostengünstiger und/oder mit höherer Zuverlässigkeit mit Turmabschnitten verbunden werden. Beispielsweise eine stoffschlüssige Verbindung, etwa durch Schweißen, von Verbindungselementen mit einem Turmabschnitt kann vorzugsweise unter gesicherten Produktionsbedingungen noch vor dem Transport des Turmabschnitts zur Baustelle, an der der Turm errichtet werden soll, erfolgen.

Ferner können auf diese Weise Verbindungselemente mit einer höheren Ausdehnung in axialer und/oder radialer Richtung hergestellt werden, als es bei einem entsprechenden ringförmigen, insbesondere kreisringförmigen, Verbindungsflansch wirtschaftlich und/oder produktionstechnisch und/oder transportbedingt möglich wäre. Auf diese Weise kann eine höhere Tragfähigkeit einer mit solchen Verbindungselementen hergestellten Verbindung erzeugt werden.

Die Befestigungsfläche kann die Form eines Segments einer Innenumfangsfläche des Turms aufweisen und ausgebildet sein, an einer Innenumfangsfläche eines Turmabschnitts angeordnet zu werden. In dieser Ausgestaltung sind die Verbindungselemente vorzugsweise an der Außenumfangsfläche des Turms nicht sichtbar. Ferner ermöglicht die Anordnung von individuellen Verbindungselementen eine größere Flexibilität hinsichtlich der Innenraumgestaltung im Turm. Beispielsweise können bestimmte Segmente der Turminnenfläche freigehalten werden für Einbauten, wie beispielsweise Leitungen, Aufstiegshilfen oder dergleichen.

Die Befestigungsfläche kann auch die Form eines Segments einer Außenumfangsfläche des Turms aufweisen und ausgebildet sein, an einer Außenumfangsfläche eines Turmabschnitts angeordnet zu werden.

Auch eine Kombination von Verbindungselementen an der Innenumfangsfläche und an der Außenumfangsfläche kann bevorzugt sein, beispielsweise um einen T-Flansch zu ersetzen.

In einer bevorzugten Ausgestaltung ist vorgesehen, dass das Verbindungselement in einer tangentialen Richtung und/oder entlang seiner Haupterstreckungsrichtung eine Erstreckung aufweist, die einem Kreisringsegment entspricht. Die Haupterstreckungsrichtung des Verbindungselements liegt vorzugsweise in einer tangentialen Richtung. Insbesondere ist bevorzugt, dass nicht nur die Befestigungsfläche die Form eines Mantelsegments eines Zylinders oder Kegels aufweist, sondern das Verbindungselement insgesamt nur einem Kreisringsegment entspricht, also nicht kreisringförmig ausgebildet ist.

Gemäß einer bevorzugten Ausführungsform ist vorgesehen, dass das Verbindungselement in einer tangentialen Richtung und/oder entlang seiner Haupterstreckungsrichtung eine Erstreckung aufweist, die einem Segment eines Polygons entspricht. Die Haupterstreckungsrichtung des Verbindungselements liegt vorzugsweise in oder parallel zu der Richtung einer der Polygonseiten, was hier auch als tangentiale Richtung bezeichnet werden kann. Insbesondere ist bevorzugt, dass nicht nur die Befestigungsfläche die Form eines Segments eines Polygons aufweist, sondern das Verbindungselement insgesamt nur einem Segment entspricht, also nicht ringförmig im Sinne eines Polygons ausgebildet ist.

Gemäß einer bevorzugten Ausführungsform ist vorgesehen, dass die Aufnahmen als Durchgangslöcher und/oder als Sacklöcher ausgebildet sind. Die Aufnahmen können alle als Durchgangslöcher oder alle als Sacklöcher ausgebildet sein. Die Aufnahmen können auch teilweise als Durchgangslöcher und teilweise als Sacklöcher ausgebildet sein. Die Aufnahmen können vorzugsweise als Bohrungen, insbesondere Gewindebohrungen, und/oder Gewindelöcher ausgebildet sein und vorzugsweise ein Innengewinde aufweisen. Ferner vorzugsweise sind die Aufnahmen angeordnet und ausgebildet, Befestigungselemente mit einem Außengewinde aufzunehmen, insbesondere Schrauben, Gewindebolzen oder dergleichen.

Erfindungsgemäß ist vorgesehen, dass die Aufnahmen in zwei, drei oder mehr Reihen angeordnet sind. Insbesondere ist bevorzugt, dass die zwei, drei oder mehr Reihen in radialer Richtung voneinander beabstandet sind.

Das Vorsehen von mehreren Reihen von Aufnahmen, insbesondere wenn diese in radialer Richtung voneinander beabstandet sind, kann die Tragfähigkeit einer mit den Verbindungselementen hergestellten Verbindung deutlich erhöhen. Gegenüber ringförmigen, insbesondere kreisringförmigen, Verbindungsflanschen ist eine radiale Vergrößerung der Verbindungselemente wirtschaftlich und/oder produktionstechnisch und/oder transportbedingt deutlich einfacher. Es ist somit bei einem Verbindungselement leichter oder überhaupt erst möglich und/oder wirtschaftlich sinnvoll, zwei oder sogar mehrere in radialer Richtung beanstandete Reihen von Aufnahmen - und damit eine entsprechend höhere Anzahl an Befestigungselementen - vorzusehen. Insbesondere aufgrund der hierdurch entstehenden Vergrößerung des Hebels kann die Tragfähigkeit der Verbindungen, die mit solchen Verbindungselementen hergestellt werden, deutlich erhöht werden. Ferner können die Verbindungselemente leichter mit einer höheren Toleranz gefertigt werden als ringförmige, insbesondere kreisringförmige, Verbindungsflansche. Durch die Beabstandung der Verbindungselemente in tangentialer Richtung und/oder in Umfangsrichtung am Turmabschnitt können sich auf Vorteile in Bezug auf die erforderliche Maßhaltigkeit, insbesondere in dieser Richtung, ergeben. Auch bei in vertikaler Richtung geteilten Turmabschnitten hat das Vorsehen einzelner Verbindungselemente Vorteile, da auf diese Weise nicht zunächst ein ringförmigen, insbesondere kreisringförmiger, Verbindungsflansch aufwendig hergestellt werden muss, um dann geteilt zu werden.

Ferner ist vorzugsweise vorgesehen, dass die Reihe(n) geradlinig oder tangential ausgerichtet ist bzw. sind. Eine tangentiale oder geradlinige Ausrichtung der Reihe(n) entspricht vorzugsweise einer Anordnung der Reihe(n) koaxial oder parallel zur Befestigungsfläche. Die Anordnung einer Reihe in geradliniger Form entspricht insbesondere der Ausrichtung einer Reihe als kürzeste Verbindung zwischen ihren beiden Endpunkten.

Insbesondere ist vorgesehen, dass die Aufnahmen einer Reihe äquidistant angeordnet sind und/oder in gleichmäßigen Abständen voneinander beabstandet sind. Die Aufnahmen einer Reihe sind vorzugsweise in tangentialer Richtung voneinander beabstandet. Die Aufnahmen unterschiedlicher Reihen sind vorzugsweise in radialer Richtung voneinander beabstandet.

Eine weitere bevorzugte Weiterbildung ist gekennzeichnet durch eine Frontfläche, die vorzugsweise der Befestigungsfläche im Wesentlichen gegenüberliegend angeordnet ist, und/oder durch eine Gegenfläche, die vorzugsweise der Verbindungsfläche im Wesentlichen gegenüberliegend angeordnet ist. Die Verbindungsfläche ist mit der Befestigungsfläche und der Frontfläche verbunden. Ferner ist die Gegenfläche mit der Befestigungsfläche und der Frontfläche verbunden.

Eine weitere bevorzugte Ausgestaltung umfasst zwei Seitenflächen, die einander vorzugsweise im Wesentlichen gegenüberliegen und/oder vorzugsweise im Einbauzustand im Wesentlichen radial und/oder vertikal angeordnet sind. Vorzugsweise sind die beiden Seitenflächen jeweils mit der Befestigungsfläche, der Frontfläche, der Verbindungsfläche und der Gegenfläche verbunden.

Es ist ferner bevorzugt, dass die Verbindungsfläche und die Gegenfläche im Wesentlichen parallel zueinander angeordnet sind. Im Einbauzustand sind die Verbindungsfläche und die Gegenfläche im Wesentlichen horizontal angeordnet.

Ferner ist vorzugsweise vorgesehen, dass im Einbauzustand eine Haupterstreckungsrichtung der Verbindungsfläche und/oder eine Haupterstreckungsrichtung der Gegenfläche und/oder eine Haupterstreckungsrichtung der Befestigungsfläche und/oder eine Haupterstreckungsrichtung der Frontfläche im Wesentlichen tangential angeordnet ist bzw. sind.

Gemäß einer bevorzugten Ausführungsform ist vorgesehen, dass die Befestigungsfläche und die Frontfläche im Wesentlichen koaxial zueinander angeordnet sind und/oder die Frontfläche im Wesentlichen geradlinig ausgebildet ist.

Eine geradlinige Ausbildung der Frontfläche ist vorzugsweise insbesondere dann gegeben, wenn die Frontfläche nicht gekrümmt ist.

Im Einbauzustand sind die Befestigungsfläche und die Frontfläche im Einbauzustand im Wesentlichen vertikal angeordnet. Bei einem sich nach oben verjüngenden Turm mit als Kegelstumpf ausgebildeten Turmabschnitten wird hier auch eine parallel zur Kegelmantelfläche bzw. koaxial zum Turmabschnitt angeordnete Ausrichtung der Befestigungsfläche und/oder der Frontfläche im Einbauzustand als im Wesentlichen vertikal bezeichnet.

Bei einer Ausbildung der Befestigungsfläche in Form eines Mantelsegments eines Kegels unterscheidet sich der Radius der Befestigungsfläche in der Regel am in Einbauzustand oberen und unteren Ende. Beispielsweise kann der Radius der Befestigungsfläche am Übergang der Befestigungsfläche zur Verbindungsfläche vom Radius der Befestigungsfläche am Übergang der Befestigungsfläche zur Gegenfläche abweichen. Welcher Radius der größere und welcher der kleinere ist, hängt insbesondere vom Einbauzustand und/oder der Richtung, in welcher sich der Turm verjüngt, ab.

Eine bevorzugte Weiterbildung zeichnet sich dadurch aus, dass die Befestigungsfläche und/oder die Frontfläche und/oder Verbindungsfläche und/oder die Gegenfläche und/oder die zwei Seitenflächen nicht in derselben Ebene angeordnet sind.

Ferner ist bevorzugt, dass die Befestigungsfläche und/oder die Frontfläche und/oder Verbindungsfläche und/oder die Gegenfläche und/oder die zwei Seitenflächen einen dreidimensionalen Körper umschließen. Die Haupterstreckungsrichtung des Körpers liegt vorzugsweise in tangentialer Richtung.

Gemäß einer weiteren bevorzugten Ausführungsform ist vorgesehen, dass die Befestigungsfläche und/oder die Frontfläche und/oder die Gegenfläche und/oder die zwei Seitenflächen frei von Aufnahmen ist bzw. sind.

Die Aufnahmen erstrecken sich, wenn sie als Durchgangslöcher ausgebildet sind, vorzugsweise von der Verbindungsfläche zur Gegenfläche. Wenn die Aufnahmen als Sacklöcher ausgebildet sind, enden die Aufnahmen vorzugsweise vor der Gegenfläche, sodass in diesem Fall die Gegenfläche frei von Aufnahmen ist.

In einer weiteren bevorzugten Ausgestaltung ist vorgesehen, dass die Befestigungsfläche eine größere tangentiale Erstreckung aufweist als die die Frontfläche und/oder das Verbindungselement in tangentialer Richtung einen oder mehrere Lippenfortsätze aufweist. Die größere tangentiale Erstreckung der Befestigungsfläche beruht vorzugsweise nicht oder nicht allein auf der radialen Erstreckung des Verbindungselements und einer dementsprechend kleineren tangentialen Erstreckung der Frontfläche. Vielmehr sind, in radialer Richtung vorzugsweise an die Befestigungsfläche angrenzen, tangentialen Lippenfortsätze vorgesehen, vorzugsweise an beiden tangentialen Enden und/oder Seitenflächen des Verbindungselements. Hierdurch kann der Zwischenraum in Umfangsrichtung zwischen benachbarten Verbindungselementen reduziert oder beseitigt werden. Dies kann in vorteilhafter Weise die Anforderungen an die Dicke des Turmabschnitts in diesem Bereich reduzieren und/oder die Tragfähigkeit des Turmabschnitts in diesem Bereich verbessern.

Die Aufnahmen erstrecken sich im Einbauzustand vorzugsweise in einer im Wesentlichen vertikalen Richtung von der Verbindungsfläche in den dreidimensionalen Körper hinein. Ferner vorzugsweise erstrecken sich die Aufnahmen vorzugsweise parallel zur Befestigungsfläche und/oder zur Frontfläche und/oder zu den Seitenflächen. Es ist ferner bevorzugt, dass sich die Aufnahmen vorzugsweise orthogonal zur Verbindungsfläche und/oder zur Gegenfläche erstrecken.

Die eingangs genannte Aufgabe wird gelöst durch einen Turmabschnitt eines Turmes einer Windenergieanlage, umfassend zwei, drei oder mehrere an einer Umfangsfläche des Turmabschnitts angeordnete zuvor beschriebene Verbindungselemente.

Die Verbindungselemente sind vorzugsweise an einem oder beiden axialen Enden des Turmabschnitts angeordnet. Ferner vorzugsweise sind die Verbindungselemente derart an der Umfangsfläche des Turmabschnitts angeordnet, dass die Verbindungsflächen der Verbindungselemente in axialer Richtung nach außen und/oder nach Innen weisen.

Die Verbindungselemente sind in Umfangsrichtung voneinander beabstandet sind. Eine bevorzugte Ausgestaltung des Turmabschnitts sieht vor, dass die Verbindungselemente in Umfangsrichtung äquidistant und/oder in tangentialer Richtung, voneinander, vorzugsweise äquidistant, beabstandet sind.

Einzelne oder alle Verbindungselemente eines Turmabschnitts können auch in axialer Richtung zu einem axialen Ende des Turmabschnitts versetzt sein, insbesondere in axialer Richtung nach oben oder unten bezogen auf eine vertikale Ausrichtung des Turmabschnitts. Vorzugsweise sind die Verbindungselemente eines axial angrenzenden Endes eines benachbarten Turmabschnitts in die entgegengesetzte axiale Richtung versetzt. Auf diese Weise können die Verbindungselemente die Positionierung und/oder Zentrierung der Turmabschnitte zueinander, beispielsweise bei der Montage, vereinfachen.

Eine weitere bevorzugte Ausgestaltung des Turmabschnitts sieht vor, dass die Verbindungselemente mit der Innenfläche des Turmabschnitts stoffschlüssig verbunden, insbesondere verschweißt, sind. Vorzugsweise erfolgt die Verbindung unter gesicherten Produktionsbedingungen, beispielsweise durch einen Schweißroboter. Eine Schweißverbindung der Verbindungselemente mit der Umfangsfläche des Turmabschnitts kann beispielsweise durch Stumpfnähte und/oder Kehlnähte und/oder (Doppel-)HV-Nähte und/oder J-Nähte erfolgen. Eine Verbindung der Verbindungselemente mit den Turmabschnitten erfolgt vorzugsweise an einer im Einbauzustand oberen Kante der Befestigungsfläche, und/oder an einer im Einbauzustand unteren Kante der Befestigungsfläche.

Gemäß einem weiteren Aspekt der Erfindung wird die eingangs genannte Aufgabe gelöst durch einen Teil eines Turmes einer Windenergieanlage, umfassend zwei zuvor beschriebene Turmabschnitte, die über in den Aufnahmen der beiden Turmabschnitte angeordnete Befestigungsmittel miteinander verbunden sind.

Die beiden Turmabschnitte sind vorzugsweise koaxial übereinander angeordnet. Ferner vorzugsweise sind die beiden Turmabschnitte mit den daran angeordneten Verbindungselementen derart ausgerichtet, dass die Aufnahmen von übereinander angeordneten Verbindungselementen der beiden Turmabschnitte jeweils koaxial ausgerichtet sind, sodass ein Befestigungselement in einer Aufnahme eines

Verbindungselements des unteren Turmabschnitts und in einer Aufnahme eines Verbindungselements des oberen Turmabschnitts aufgenommen werden kann und/oder diese Aufnahmen des oberen und unteren Verbindungselements durchdringen kann.

Eine weitere bevorzugte Ausgestaltung des Teils eines Turmes sieht vor, dass die Befestigungsmittel als Schrauben und/oder Gewindebolzen ausgebildet sind.

Gemäß einem weiteren Aspekt der Erfindung wird die eingangs genannte Aufgabe gelöst durch einen Turm einer Windenergieanlage, umfassend mindestens einen zuvor beschriebenen Teil eines Turmes, und/oder mindestens einen zuvor beschriebenes Turmabschnitt, und/oder mindestens ein zuvor beschriebenes Verbindungselement.

Gemäß einem weiteren Aspekt der Erfindung wird die eingangs genannte Aufgabe gelöst durch eine Windenergieanlage, umfassend mindestens einen zuvor beschriebenen Turm, und/oder mindestens einen zuvor beschriebenen Teil eines Turmes, und/oder mindestens einen zuvor beschriebenes Turmabschnitt, und/oder mindestens ein zuvor beschriebenes Verbindungselement.

Gemäß einem weiteren Aspekt der Erfindung wird die eingangs genannte Aufgabe gelöst durch ein Verfahren zum Herstellen eines Turmabschnitts eines Turmes einer Windenergieanlage, umfassend Bereitstellen eines Turmabschnitts, Anordnen eines zuvor beschriebenen Verbindungselements an einer Umfangsfläche des Turmabschnitts.

Das Verfahren zum Herstellen eines Turmabschnitts eines Turmes einer Windenergieanlage kann vorzugsweise fortgebildet werden durch vorzugsweise Transportieren des Turmabschnitts von einer ersten Montagestelle an eine zweite Montagestelle, Verbinden des Turmabschnitts mit einem weiteren Turmabschnitt, der vorzugsweise eine größere axiale Erstreckung aufweist.

In dieser Ausgestaltung wird zunächst ein Turmabschnitt mit einer kleinen axialen Erstreckung, beispielsweise von weniger als 5m, insbesondere weniger als 2m, vorzugsweise von weniger als 1m, mit Verbindungselementen versehen. Dies erfolgt vorzugsweise an einer ersten Montagestelle, die beispielsweise besonders ausgebildet sein kann für die Montage einzelner über eine Umfangsfläche verteilter Verbindungselemente. Anschließend kann dieser Turmabschnitt mit den daran angeordneten Verbindungselementen beispielsweise an eine zweite Montagestelle transportiert werden, wo dieser Turmabschnitt dann mit einem weiteren Turmabschnitt verbunden wird. Der weitere Turmabschnitt weist vorzugsweise eine größere axiale Erstreckung auf, insbesondere eine axiale Erstreckung die einem Vielfachen des Turmabschnitts mit den daran angeordneten Verbindungselementen entspricht. Dieses Verfahren ermöglicht es somit, zunächst die Verbindungselemente mit einem Turmabschnitt zu verbinden und anschließend einen solchen - vergleichsweise kurzen - Turmabschnitt zu transportieren, um ihn mit einem - deutlich längeren - Turmabschnitt zu verbinden. Der Transport eines solchen kurzen Turmabschnitts mit Verbindungselementen ist deutlich leichter als der des langen, weiteren Turmabschnitts. Auch die Anbringung der einzelnen Verbindungselemente an Turmabschnitt ist einem kurzen Turmabschnitt deutlich leichter. Die Verbindung des kurzen Turmabschnitts mit Verbindungselementen mit dem langen, weiteren Turmabschnitt erfolgt vorzugsweise durch Schweißen und/oder ferner vorzugsweise entlang der gesamten Umfangsfläche der Turmabschnitte.

Gemäß einem weiteren Aspekt der Erfindung wird die eingangs genannte Aufgabe gelöst durch ein Verfahren zum Verbinden von Turmabschnitten eines Turmes einer Windenergieanlage, umfassend Anordnen von zwei zuvor beschriebenen Turmabschnitten übereinander, Verbinden der beiden Turmabschnitte durch Anordnen von Befestigungselementen in den Aufnahmen der Verbindungselemente der beiden Turmabschnitte. Die Turmabschnitte werden insbesondere derart übereinander angeordnet, dass sie im Betriebszustand der Windenergieanlage vertikal übereinander angeordnet sind. Bei der Herstellung und/oder beim Transport kann dies ebenfalls einer Anordnung in vertikaler Richtung entsprechen, beispielsweise beim offshore Transport von offshore Türmen, aber auch einer Anordnung in im wesentlichen horizontaler Richtung, wenn die Türme bzw. Turmabschnitte liegend oder geneigt transportiert werden.

Die Vorrichtungen und Verfahren dieser weiteren Aspekte der Erfindung weisen vorzugsweise Merkmale bzw. Verfahrensschritte auf, die sie insbesondere dafür geeignet machen, mit einem erfindungsgemäßen Verbindungselement und seinen Fortbildungen verwendet zu werden. Zu den Vorteilen, Ausführungsvarianten und Ausführungsdetails dieser weiteren Aspekte der Erfindung und ihrer möglichen Fortbildungen wird auch auf die vorangegangene Beschreibung zu den entsprechenden Merkmalen des Verbindungselements und seiner möglichen Fortbildungen verwiesen.

Eine bevorzugte Ausführungsform der Erfindung wird beispielhaft anhand der beiliegenden Figuren beschrieben. Es zeigen:
- Figur 1:: eine dreidimensionale Ansicht einer Windenergieanlage mit einem Turm und einer Gondel;
- Figur 2:: eine dreidimensionale Ansicht eines Drittels eines längsgeteilten Turmabschnitts mit vier Verbindungselementen;
- Figur 3:: eine dreidimensionale Ansicht eines Teils eines Turms mit zwei noch nicht verbundenen Turmabschnitten;
- Figur 4:: den Teil eines Turms gemäß Figur 3, bei dem der obere Turmabschnitt, die Verbindungselemente und die Befestigungselemente jeweils nur mit ihren Kanten dargestellt sind;
- Figur 5:: eine dreidimensionale Ansicht von drei Verbindungselementen, insbesondere eines unteren Turmabschnitts;
- Figur 6:: eine dreidimensionale Ansicht von drei Verbindungselementen, insbesondere eines oberen Turmabschnitts;
- Figur 7:: eine dreidimensionale Ansicht einer weiteren Ausführungsform eines Verbindungselements; und
- Figur 8:: eine dreidimensionale Ansicht einer weiteren Ausführungsform von Verbindungselementen.

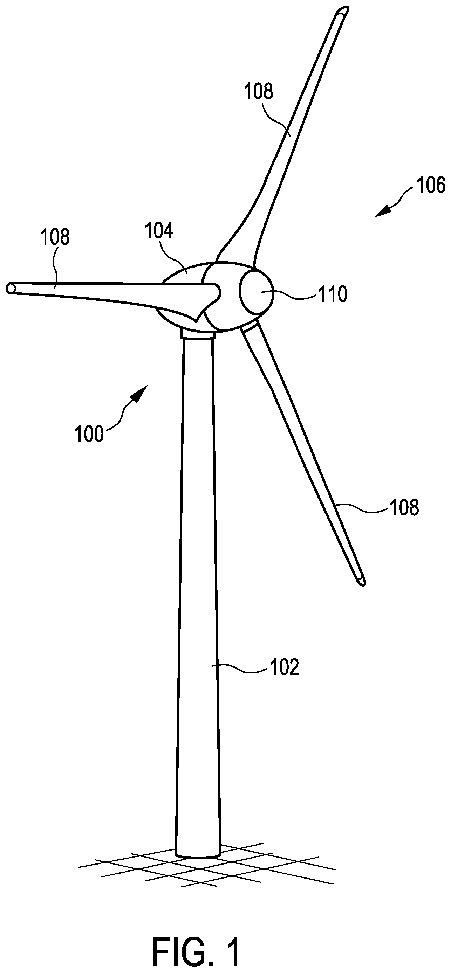

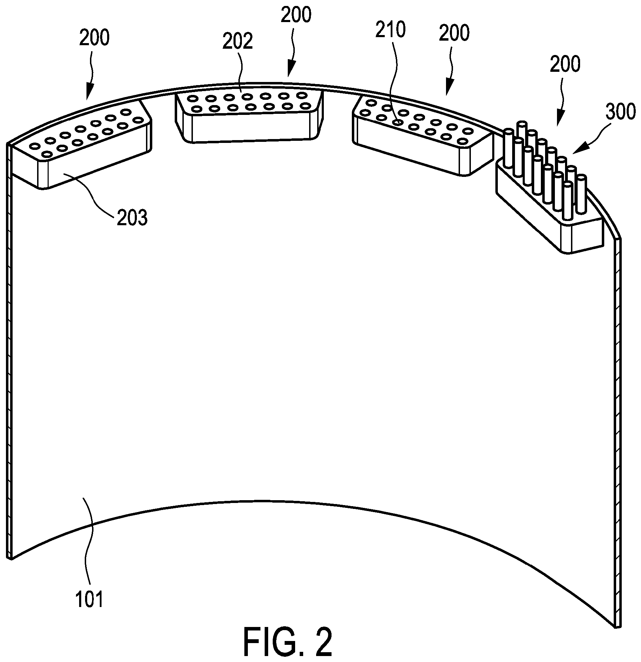

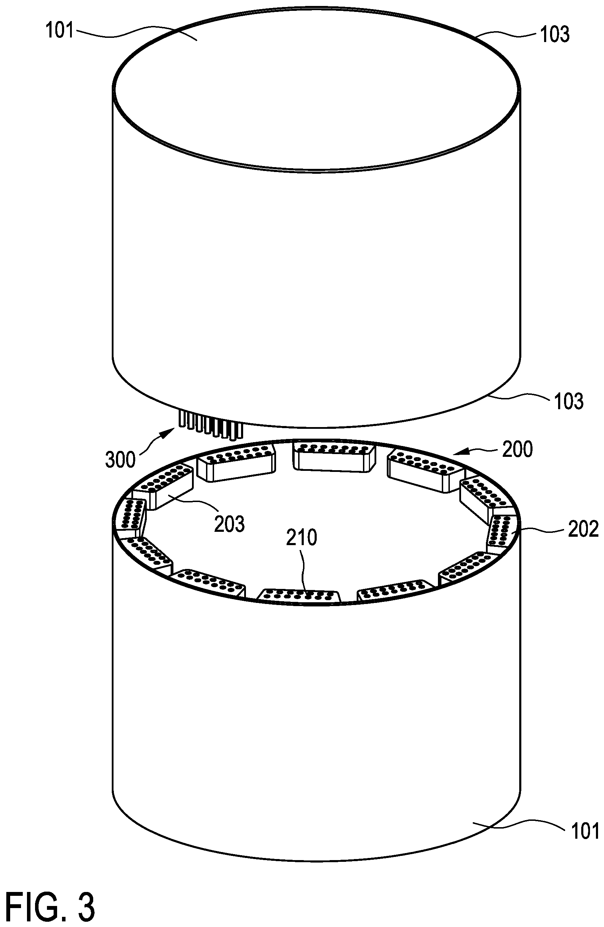

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Turm 102 weist zwei oder mehrere der in den Figuren 2 und 3 dargestellten Turmabschnitte 101 auf.

Figur 2 zeigt eine dreidimensionale Ansicht eines Drittels (120°) eines längsgeteilten Turmabschnitts 101 für einen Turm 102 einer Windenergieanlage 100 mit vier Verbindungselementen 200. In einem der Verbindungselemente 200 sind Befestigungselemente 300 in den Aufnahmen 210 angeordnet.

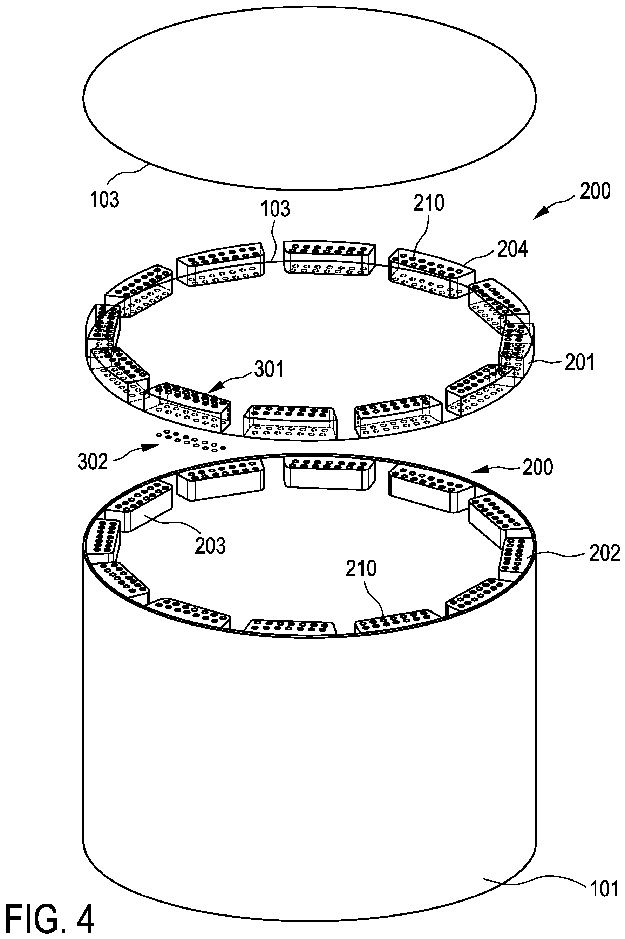

Die Figuren 3 und 4 zeigen einen Teil eines Turms mit zwei vertikal übereinander angeordneten, koaxialen Turmabschnitten 101. In Figur 4 sind das obere Turmabschnitt 101, die Verbindungselemente 200 und die Befestigungselemente 300 lediglich mit ihren Kanten dargestellt. Insbesondere die Ringe 103 markieren das obere und untere axiale Ende des oberen Turmabschnitts 101. Mit 301 und 302 sind die oberen und unteren Enden der Befestigungselemente 300 bezeichnet.

Beide Turmabschnitte 101 weisen je zwölf Verbindungselemente 200 auf, die in tangentialer Richtung und/oder in Umfangsrichtung voneinander beabstandet und äquidistant angeordnet sind. Die Verbindungselemente 200 weisen eine Erstreckung in Umfangsrichtung des Turmabschnitts 101 von weniger als 30 Bogengrad auf.

Am unteren Turmabschnitt 101 sind die Verbindungselemente 200 an einem oberen axialen Ende angeordnet. Am unteren Turmabschnitt 101 sind die Verbindungselemente 200 an einem unteren axialen Ende angeordnet.

Die beiden Turmabschnitte 101 sind derart zueinander ausgerichtet, dass die - hier nur für ein Verbindungselement 200 dargestellten - Befestigungselemente 300 in die Aufnahmen des jeweils axial darunterliegenden Verbindungselements eingreifen können.

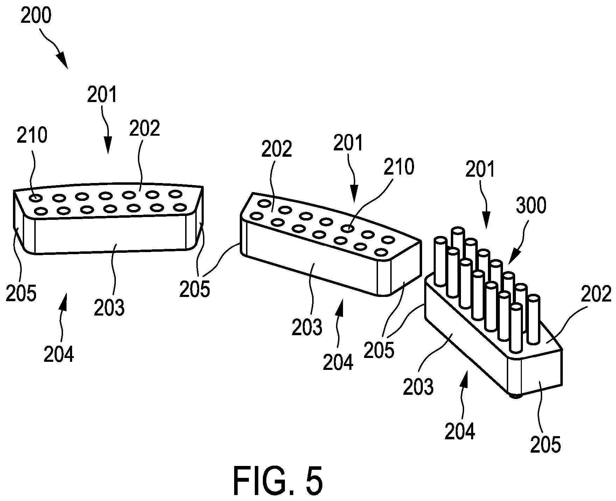

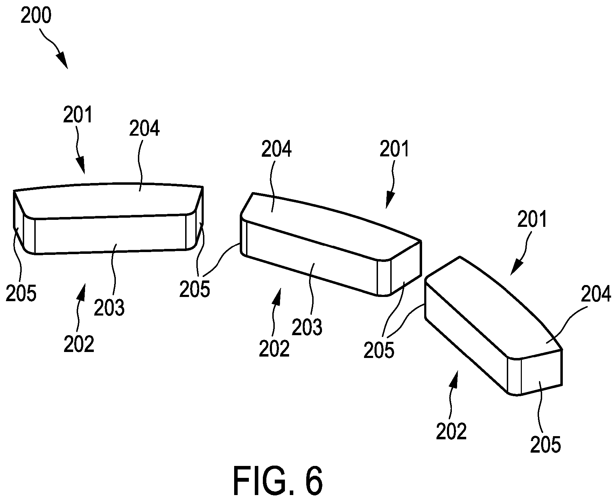

In den Figuren 5 und 6 sind die Verbindungselemente des unteren und oberen Turmabschnitts 101 näher dargestellt. Befestigungselemente 300 sind nur für ein Verbindungselement 200 dargestellt, befinden sich vorzugsweise aber in den Aufnahmen aller Verbindungselemente 200. Befestigungselemente 300 sind vorzugsweise derart angeordnet und ausgebildet, dass sie zwei vertikal übereinander angeordnete Verbindungselemente miteinander verbinden können.

Jedes der Verbindungselemente 200 weist eine Befestigungsfläche 201 auf, die die Form eines Segments einer Innenumfangsfläche des Turms aufweist, im hier gezeigten Ausführungsbeispiel die Form eines Mantelsegments eines Zylinders. Die Befestigungsfläche ist ausgebildet, an der Innenfläche eines Turmabschnitts 101 angeordnet zu werden. Es sind entsprechend auch Verbindungselemente möglich, deren Befestigungsfläche die Form eines Segments einer Außenumfangsfläche des Turms aufweist. Eine der Befestigungsfläche gegenüberliegende Frontfläche würde bei einer Anordnung an einer Außenumfangsfläche des Turms nach außen weisen.

Jedes der Verbindungselemente 200 weist ferner eine Verbindungsfläche 202 mit Aufnahmen 210 und eine dieser Verbindungsfläche 202 gegenüberliegende Gegenfläche 204 auf. Die Verbindungsflächen 202 der Verbindungselemente 200 weisen in axialer Richtung nach außen.

Die Aufnahmen 210 können Durchgangslöcher oder Sacklöcher sein. Bei den in Figur 6 dargestellten Verbindungselementen 200 sind die Aufnahmen als Sacklöcher ausgebildet, da die Gegenfläche 204 keine Öffnungen zeigen. Bei den in Figur 5 dargestellten Verbindungselementen 200 können die Aufnahmen 210 als Durchgangslöcher oder Sacklöcher ausgebildet sein.

Jedes der Verbindungselemente 200 weist ferner eine der Befestigungsfläche 201 im Wesentlichen gegenüberliegende Frontfläche 203 auf. Bei den hier dargestellten Befestigungselementen 200 sind die Frontflächen 203 geradlinig, also nicht gekrümmt, ausgebildet und parallel zur geradlinigen Ausrichtung der beiden Reihen der Aufnahmen 210. Ebenso ist beispielsweise auch eine tangentiale bzw. koaxiale Ausrichtung bzw. Krümmung der Reihen und/oder Frontflächen 203 möglich.

Jedes der Verbindungselemente 200 weist ferner zwei Seitenflächen 205 auf, die einander im Wesentlichen gegenüberliegen und sowohl im Wesentlichen radial und im Wesentlichen vertikal angeordnet sind. Die beiden Seitenflächen 205 sind jeweils mit der Befestigungsfläche 201, der Frontfläche 203, der Verbindungsfläche 202 und der Gegenfläche 204 verbunden.

Die Seitenflächen 205, die Befestigungsflächen 201 und die Frontflächen 203 sind frei von Aufnahmen.

Die Befestigungsfläche 201, die Frontfläche 203, die Verbindungsfläche 202, die Gegenfläche 204 und die Seitenflächen 205 sind nicht in derselben Ebene angeordnet und umschließen einen dreidimensionalen Körper. Die Haupterstreckungsrichtung dieses Körpers liegt, ebenso wie eine Haupterstreckungsrichtung der Befestigungsfläche 201 und eine Haupterstreckungsrichtung der Frontfläche 203 und eine Haupterstreckungsrichtung der Verbindungsfläche 202 und eine Haupterstreckungsrichtung der Gegenfläche 204 im hier in den Figuren dargestellten Einbauzustand in einer im Wesentlichen tangentialen Richtung. Neben den im Einbauzustand im Wesentlichen vertikal ausgerichteten Flächen Befestigungsfläche 201, Frontfläche 203 und Seitenflächen 205, sind die Verbindungsfläche 202 und die Gegenfläche 204 im Einbauzustand im Wesentlichen horizontal ausgerichtet.

Die Aufnahmen 210 der Verbindungselemente 200 sind in zwei in radialer Richtung voneinander beabstandeten Reihen angeordnet. Die beiden Reihen sind geradlinig angeordnet, d.h. sie sind nicht in tangentialer Richtung und/oder Umfangsrichtung angeordnet und nicht koaxial zu den Befestigungsflächen 201 angeordnet. Bei der hier gezeigten geradlinigen Anordnung der Reihen entspricht die Ausrichtung der Reihen lediglich in ihrem Mittelpunkt einer Tangente zu Befestigungsfläche 201 und weicht ansonsten von der tangentialen Ausrichtung ab. Die Anordnung der Reihen in geradliniger Form entspricht auch der Ausrichtung der Reihen als kürzeste Verbindung zwischen ihren jeweiligen Endpunkten, insbesondere der jeweils äußeren Aufnahmen 210.

Die Aufnahmen 210 erstrecken sich im Einbauzustand in einer im Wesentlichen vertikalen Richtung von der Verbindungsfläche 202 in den dreidimensionalen Körper hinein. Die Aufnahmen 210 erstrecken sich ferner parallel zur Befestigungsfläche 201, zu Frontfläche 203 und zu den Seitenflächen 205. Die Aufnahmen 210 erstrecken sich zudem orthogonal zur Verbindungsfläche 202 und zu Gegenfläche 204.

Die Verbindungselemente 200 sind mit dieser Befestigungsfläche 201 mit den Innenflächen der Turmabschnitte 101 verbunden, vorzugsweise durch eine stoffschlüssige Verbindung, insbesondere durch eine linienförmige Verbindung in Form von Schweißnähten an der oberen und unteren Kante der Befestigungsflächen 201. An ihren oberen und unteren Kanten geht die Befestigungsfläche 201 in die Verbindungsfläche 202 und die Gegenfläche 204 über.

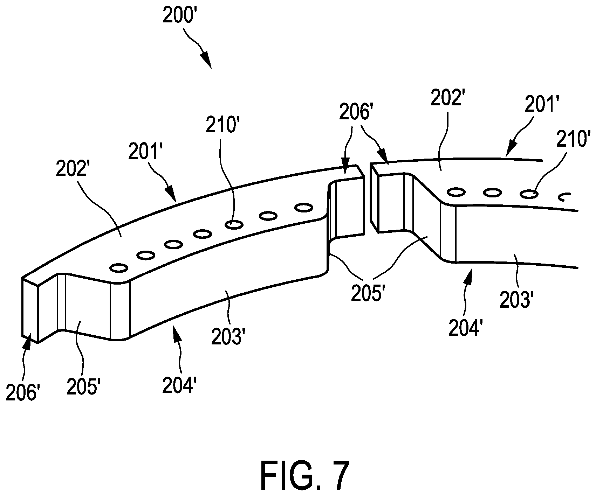

Figur 7 zeigt eine mögliche alternative Ausgestaltungsform von Verbindungselementen 200', die zusätzlich oder alternativ zu den in den übrigen Zeichnungen dargestellten Verbindungselementen 200 eingesetzt werden können. Das Verbindungselement 200' weist ähnlich wie ein Verbindungselement 200 eine Befestigungsfläche 201', eine Frontfläche 203', eine Verbindungsfläche 202', eine Gegenfläche 204' und Seitenflächen 205' auf. Die Befestigungsfläche 201' weist eine größere Tangentialerstreckung auf als die Frontfläche 203'. Dies ist insbesondere dadurch bedingt, dass das Verbindungselements 200' zwei Lippenfortsätze 206' aufweist, die zur Stabilisierung des Turmabschnitts in den Bereichen zwischen 2 Verbindungselementen dienen kann und die Anforderungen an die Decke des Turmabschnitts in diesem Bereich reduzieren kann.

Alternativ zu der hier in den Figuren dargestellten Ausführung, bei der die Turmabschnitte hohlzylinderförmig ausgebildet sind und die Befestigungsflächen 201 die Form eines Mantelsegments eines Zylinders aufweisen, können die Befestigungsflächen 201 auch die Form eines Mantelsegments eines Kegels aufweisen, um an den Innenflächen von Turmabschnitten in der Form eines Kegelstumpfs angeordnet zu werden. Ferner können die Turmabschnitte polygonförmig ausgebildet sein und die Befestigungsflächen eben, ohne Krümmung ausgebildet sein.

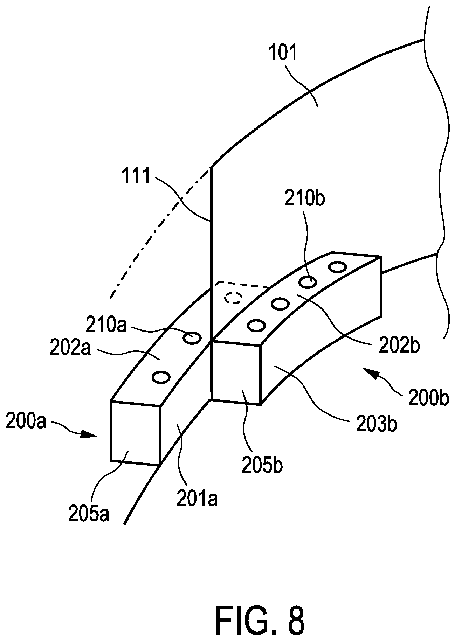

Eine weitere mögliche Ausführungsform ist in Figur 8 dargestellt, bei dem ein Verbindungselement 200a an einer Außenumfangsfläche des Turmabschnitts 101 angeordnet ist und ein Verbindungselement 200b an einer Innenempfangsfläche des Turmabschnitts 101. Die Befestigungsfläche 201a des Verbindungselements 200a hat die Form eines Kreisringsegments und ist der Außenumfangsfläche des Turmabschnitts 101. Eine der Befestigungsfläche 201a gegenüberliegende Frontfläche weist beim Verbindungselements 200a nach außen. Die Befestigungsfläche 201b des Verbindungselements 200 b hat ebenfalls die Form eines Kreisringsegments, ist jedoch an der in den Umfangsfläche des Turmabschnitts 101 angeordnet. Die Frontfläche 203b des Verbindungselements 200b weist nach innen.

Die Verbindungsflächen 202a, b der beiden Verbindungselemente 200 a, b weisen im wesentlichen nach oben und weisen Aufnahmen 210a, b auf. Die Seitenflächen 205a, b sind tangential ausgerichtet.

In dem in Figur 8 gezeigten Beispiel wird ferner deutlich, dass der Turmabschnitt 101 aus mehreren Teilen zusammengesetzt ist, die an einem im wesentlichen vertikalen Stoß 111 zusammengefügt sind. Wie in Figur 8 am Beispiel des Verbindungselements 200a gezeigt, ganz bevorzugt sein, dass ein oder mehrere Verbindungselemente derart angeordnet sind, dass sie einen solchen vertikalen Stoß des Turmabschnitts übergreifen.

Die Verbindungselemente und damit verbundene Turmabschnitte ebenso wie ein Turm mit solchen Turmabschnitten haben verschiedene Vorteile. Insbesondere können solche einzelnen Verbindungselemente deutlich kostengünstiger hergestellt und transportiert werden als kreisringförmige Verbindungsflansche. Ferner kann auch die radiale und axiale Erstreckung der Verbindungselemente deutlich einfacher als bei einem kreisringförmigen Verbindungsflansch vergrößert werden, sodass die Anordnung von zwei Reihen von Aufnahmen und damit auch von zwei Reihen von Befestigungselementen möglich wird und somit die Zuverlässigkeit und Tragfähigkeit der Verbindung verbessert werden kann. Eine größere radiale Ausdehnung der Verbindungsstücke führt insbesondere zu einer besseren Spannlänge der Verbindungen. Ferner ermöglicht die Anordnung von individuellen Verbindungselementen eine größere Flexibilität hinsichtlich der Innenraumgestaltung im Turm.

## Patentansprüche

1. Turmabschnitt (101) eines Turms einer Windenergieanlage (100), umfassend zwei, drei oder mehrere an einer Umfangsfläche des Turmabschnitts (101) angeordnete Verbindungselemente (200) zum Verbinden von Turmabschnitten (101) eines Turms einer Windenergieanlage (100), jeweils umfassend eine Befestigungsfläche (201), die die Form eines Segments einer Umfangsfläche des Turms aufweist, und ausgebildet ist, an einer Umfangsfläche eines Turmabschnitts (101) angeordnet zu werden, eine zur Befestigungsfläche (201) in einem Winkel angeordnete Verbindungsfläche (202), die Aufnahmen (210) zur Aufnahme von Befestigungselementen (300) aufweist,
wobei die Befestigungsfläche (201), eine Frontfläche (203), die Verbindungsfläche (202), eine weitere Frontfläche (204) und zwei Seitenflächen (205) einen dreidimensionalen Körper umschließen,
wobei die Verbindungselemente (200) in Umfangsrichtung voneinander beabstandet sind,
**dadurch gekennzeichnet, dass** jeweils eine Erstreckung der Verbindungselemente in Umfangsrichtung des Turmabschnitts (101) weniger als 60 Bogengrad entspricht,
wobei im Einbauzustand die Verbindungsfläche (202) und die Gegenfläche (204) im Wesentlichen horizontal angeordnet sind,
wobei im Einbauzustand die Befestigungsfläche (201) und die Frontfläche (203) im Wesentlichen vertikal angeordnet sind,
wobei die Verbindungsfläche mit der Befestigungsfläche und der Frontfläche verbunden ist,
wobei die Gegenfläche mit der Befestigungsfläche und der Frontfläche verbunden ist, und
wobei die Aufnahmen (210) in zwei, drei oder mehreren Reihen angeordnet sind.

2. Turmabschnitt (101) nach dem vorhergehenden Anspruch, **dadurch gekennzeichnet, dass** die Befestigungsfläche (201) die Form eines Segments einer Innenumfangsfläche des Turms aufweist, und ausgebildet ist, an einer Innenumfangsfläche des Turmabschnitts (101) angeordnet zu werden, und/oder **dadurch gekennzeichnet, dass** die Befestigungsfläche (201) die Form eines Segments einer Außenumfangsfläche des Turms aufweist, und ausgebildet ist, an einer Außenumfangsfläche des Turmabschnitts (101) angeordnet zu werden.

3. Turmabschnitt (101) nach mindestens einem der vorhergehenden Ansprüche, **dadurch gekennzeichnet, dass** die Verbindungselemente (200) jeweils in einer tangentialen Richtung und/oder entlang seiner Haupterstreckungsrichtung eine Erstreckung aufweisen, die einem Kreisringsegment entspricht.

4. Turmabschnitt (101) nach mindestens einem der vorhergehenden Ansprüche, **dadurch gekennzeichnet, dass** die Aufnahmen (210) als Durchgangslöcher und/oder als Sacklöcher ausgebildet sind.

5. Turmabschnitt (101) nach mindestens einem der vorhergehenden Ansprüche, **dadurch gekennzeichnet, dass** die zwei Reihen in radialer Richtung voneinander beabstandet sind, und/oder **dadurch gekennzeichnet, dass** die Reihe(n) geradlinig oder tangential ausgerichtet ist bzw. sind.

6. Turmabschnitt (101) nach mindestens einem der vorhergehenden Ansprüche, wobei die Frontfläche (203) der Befestigungsfläche (201) im Wesentlichen gegenüberliegend angeordnet ist, und/oder wobei die Frontfläche (204) der Verbindungsfläche (202) im Wesentlichen gegenüberliegend angeordnet ist, und/oder wobei die zwei Seitenflächen (205) einander im Wesentlichen gegenüberliegen und/oder vorzugsweise im Wesentlichen radial und/oder vertikal angeordnet sind.

7. Turmabschnitt (101) nach mindestens einem der vorhergehenden Ansprüche, **dadurch gekennzeichnet, dass** im Einbauzustand die Verbindungsfläche (202) und die Gegenfläche (204) im Wesentlichen parallel zueinander angeordnet sind, und/oder **dadurch gekennzeichnet, dass** im Einbauzustand eine Haupterstreckungsrichtung der Verbindungsfläche (202) und/oder eine Haupterstreckungsrichtung der Gegenfläche (204) und/oder eine Haupterstreckungsrichtung der Befestigungsfläche (201) und/oder eine Haupterstreckungsrichtung der Frontfläche (203) im Wesentlichen tangential angeordnet ist bzw. sind, und/oder **dadurch gekennzeichnet, dass** die Befestigungsfläche (201) und die Frontfläche (203) im Wesentlichen koaxial zueinander angeordnet sind und/oder die Frontfläche (203) im Wesentlichen geradlinig ausgebildet ist.

8. Turmabschnitt (101) nach mindestens einem der vorhergehenden Ansprüche, **dadurch gekennzeichnet, dass** die Befestigungsfläche (201) und/oder die Frontfläche (203) und/oder Verbindungsfläche (202) und/oder die Frontfläche (204) und/oder die zwei Seitenflächen (205) nicht in derselben Ebene angeordnet sind, und/oder **dadurch gekennzeichnet, dass** die Befestigungsfläche (201) und/oder die Frontfläche (203) und/oder die Frontfläche (204) und/oder die zwei Seitenflächen (205) frei von Aufnahmen (210) ist bzw. sind, und/oder **dadurch gekennzeichnet, dass** die Befestigungsfläche (201) eine größere tangentiale Erstreckung aufweist als die die Frontfläche (203) und/oder das Verbindungselement (200) in tangentialer Richtung einen oder mehrere Lippenfortsätze (206') aufweist.

9. Turmabschnitt (101) nach mindestens einem der vorhergehenden Ansprüche, **dadurch gekennzeichnet, dass** die Verbindungselemente (200) in Umfangsrichtung voneinander äquidistant, beabstandet sind, und/oder **dadurch gekennzeichnet, dass** die Verbindungselemente (200) mit der Umfangsfläche des Turmabschnitts (101) stoffschlüssig verbunden, insbesondere verschweißt, sind.

10. Teil eines Turmes einer Windenergieanlage (100), umfassend zwei Turmabschnitte (101) nach mindestens einem der vorhergehenden Ansprüche, die über in den Aufnahmen (210) der beiden Turmabschnitte (101) angeordnete Befestigungsmittel miteinander verbunden sind.

11. Turm einer Windenergieanlage (100), umfassend mindestens einen Teil eines Turmes nach dem vorhergehenden Anspruch, und/oder mindestens einen Turmabschnitt (101) nach mindestens einem der vorhergehenden Ansprüche 1-9.

12. Windenergieanlage (100), umfassend mindestens einen Turm nach dem vorhergehenden Anspruch, und/oder mindestens einen Teil eines Turmes nach Anspruch 10, und/oder mindestens einen Turmabschnitt (101) nach mindestens einem der vorhergehenden Ansprüche 1-9,.

13. Verfahren zum Herstellen eines Turmabschnitts (101) einer Windenergieanlage (100), umfassend:
- Bereitstellen eines Turmabschnitts (101), **gekennzeichnet durch**
- Anordnen eines Verbindungselements an einer Umfangsfläche des Turmabschnitts (101) nach mindestens einem der Ansprüche 1-9.

14. Verfahren nach dem vorhergehenden Anspruch, umfassend:
- vorzugsweise Transportieren des Turmabschnitts (101) von einer ersten Montagestelle an eine zweite Montagestelle,
- Verbinden des Turmabschnitts mit einem weiteren Turmabschnitt, der vorzugsweise eine größere axiale Erstreckung aufweist.

15. Verfahren zum Verbinden von Turmabschnitten (101) einer Windenergieanlage (100),
**gekennzeichnet durch**:
- Anordnen von zwei Turmabschnitten (101) nach mindestens einem der vorhergehenden Ansprüche 1-9 übereinander,
- Verbinden der beiden Turmabschnitte (101) durch Anordnen von Befestigungselementen (300) in den Aufnahmen (210) der Verbindungselemente (200) der beiden Turmabschnitte (201).

## Claims

1. A tower portion (101) of a tower of a wind turbine (100), comprising two, three or more connecting elements (200) that are arranged on a circumferential surface of the tower portion (101) for connecting tower portions (101) of a tower of a wind turbine (100), each comprising
a fastening surface (201) which has the form of a segment of a circumferential surface of the tower and is designed to be arranged on a circumferential surface of a tower portion (101), and a connecting surface (202) which is arranged at an angle to the fastening surface (201) and which has receptacles (210) for receiving fastening elements (300),
wherein the fastening surface (201), a front surface (203), the connecting surface (202), a further front surface (204) and two lateral surfaces (205) enclose a three-dimensional body,
wherein the connecting elements (200) are spaced apart from one another in the circumferential direction,
**characterized in that** one extent of each connecting elements in the circumferential direction of a tower portion (101) corresponds to less than 60 degrees,
wherein, in the installed state, the connecting surface (202) and the counter-surface (204) are arranged substantially parallel to one another,
wherein, in the installed state, the fastening surface (201) and the front surface (203) are arranged substantially vertically,
wherein the connecting surface is connected to the fastening surface and to the front surface,
wherein the counter-surface is connected to the fastening surface and to the front surface, and
wherein the receptacles (210) are arranged in two, three or more rows.

2. Tower portion (101) as claimed in the preceding claim,
**characterized in that** the fastening surface (201) has the form of a segment of an inner circumferential surface of the tower and is designed to be arranged on an inner circumferential surface of the tower portion (101), and/or **characterized in that** the fastening surface (201) has the form of a segment of an outer circumferential surface of the tower and is designed to be arranged on an outer circumferential surface of the tower portion (101).

3. Tower portion (101) as claimed in at least one of the preceding claims, **characterized in that** the connecting elements (200) each have, in a tangential direction and/or along its main direction of extent, an extent which corresponds to a circular ring segment.

4. Tower portion (101) as claimed in at least one of the preceding claims, **characterized in that** the receptacles (210) take the form of through-holes and/or blind holes.

5. Tower portion (101) as claimed in at least one of the preceding claims,
**characterized in that** the two rows are spaced apart from one another in the radial direction, and/or
**characterized in that** the row(s) is or are oriented rectilinearly or tangentially.

6. Tower portion (101) as claimed in at least one of the preceding claims,
wherein the front surface (203) is arranged substantially opposite to the fastening surface (201), and/or
wherein the front surface (204) is arranged substantially opposite to the connecting surface (202), and/or
wherein the two lateral surfaces (205) are substantially opposite to one another and/or are preferably arranged substantially radially and/or vertically.

7. Tower portion (101) as claimed in at least one of the preceding claims, **characterized in that**, in the installed state, the connecting surface (202) and the counter-surface (204) are arranged substantially parallel to one another, and/or
**characterized in that**, in the installed state, a main direction of extent of the connecting surface (202) and/or a main direction of extent of the counter-surface (204) and/or a main direction of extent of the fastening surface (201) and/or a main direction of extent of the front surface (203) are or is arranged substantially tangentially, and/or
**characterized in that** the fastening surface (201) and the front surface (203) are arranged substantially coaxially to one another, and/or the front surface (203) is formed substantially rectilinearly.

8. Tower portion (101) as claimed in at least one of the preceding claims, **characterized in that** the fastening surface (201) and/or the front surface (203) and/or connecting surface (202) and/or the front surface (204) and/or the two lateral surfaces (205) are or is not arranged in the same plane, and/or **characterized in that** the fastening surface (201) and/or the front surface (203) and/or the front surface (204) and/or the two lateral surfaces (205) are or is free of receptacles (210), and/or
**characterized in that** the fastening surface (201) has a larger tangential extent than the front surface (203) and/or the connecting element (200) has one or more lip extensions (206') in the tangential direction.

9. The tower portion (101) as claimed in at least one of the preceding claims, **characterized in that** the connecting elements (200) are spaced apart from one another equidistantly in the circumferential direction, and/or **characterized in that** the connecting elements (200) are integrally bonded, in particular welded, to the circumferential surface of the tower portion (101).

10. A part of a tower of a wind turbine (100), comprising
two tower portions (101) as claimed in at least one of the preceding claims which are connected to one another via fastening means which are arranged in the receptacles (210) of the two tower portions (101).

11. A tower of a wind turbine (100), comprising
at least one part of a tower as claimed in the preceding claim, and/or
at least one tower portion (101) as claimed in at least one of the preceding claims 1-9.

12. A wind turbine (100), comprising
at least one tower as claimed in the preceding claim, and/or
at least one part of a tower as claimed in claim 10, and/or
at least one tower portion (101) as claimed in at least one of the preceding claims 1-9.

13. A method for producing a tower portion (101) of a wind turbine (100), comprising:
- providing a tower portion (101), **characterized by**
- arranging a connecting element on a circumferential surface of the tower portion (101) as claimed in at least one of the preceding claims 1-9.

14. The method as claimed in the preceding claim,
comprising:
- preferably transporting the tower portion (101) from a first assembly site to a second assembly site,
- connecting the tower portion to a further tower portion which preferably has a greater axial extent.

15. A method for connecting tower portions (101) of a wind turbine (100), **characterized by**:
- arranging two tower portions (101) as claimed in at least one of the preceding claims 1-9 one above the other,
- connecting the two tower portions (101) by arranging fastening elements (300) in the receptacles (210) of the connecting elements (200) of the two tower portions (101).

## Revendications

1. Section de tour (101) d'une tour d'une éolienne (100), comprenant deux, trois ou plus éléments de liaison (200) disposés sur une surface périphérique de la section de tour (101) pour relier des sections de tour (101) d'une tour d'une éolienne (100), comprenant respectivement une surface de fixation (201), qui présente la forme d'un segment d'une surface périphérique de la tour et qui est réalisée pour être disposée sur une surface périphérique d'une section de tour (101), une surface de liaison (202) disposée à un angle par rapport à la surface de fixation (201), qui présente des logements (210) pour recevoir des éléments de fixation (300),
dans laquelle la surface de fixation (201), une surface avant (203), la surface de liaison (202), une autre surface avant (204) et deux surfaces latérales (205) renferment un corps tridimensionnel,
dans laquelle les éléments de liaison (200) sont espacés les uns des autres dans la direction circonférentielle,
**caractérisée en ce qu'**une extension des éléments de liaison dans la direction circonférentielle de la section de tour (101) correspond respectivement à moins de 60 degrés d'arc,
dans laquelle, dans l'état monté, la surface de liaison (202) et la contre-surface (204) sont disposées de manière sensiblement horizontale,
dans laquelle, dans l'état monté, la surface de fixation (201) et la surface avant (203) sont disposées de manière essentiellement verticale,
dans laquelle la surface de liaison est reliée à la surface de fixation et à la surface avant,
dans laquelle la contre-surface est reliée à la surface de fixation et à la surface avant, et
dans laquelle les logements (210) sont disposés en deux, trois rangées ou plus.

2. Section de tour (101) selon la revendication précédente, **caractérisée en ce que** la surface de fixation (201) présente la forme d'un segment d'une surface périphérique intérieure de la tour, et est réalisée pour être disposée sur une surface périphérique intérieure de la section de tour (101), et/ou **caractérisée en ce que** la surface de fixation (201) présente la forme d'un segment d'une surface périphérique extérieure de la tour, et est réalisée pour être disposée sur une surface périphérique extérieure de la section de tour (101).

3. Section de tour (101) selon au moins l'une quelconque des revendications précédentes, **caractérisée en ce que** les éléments de liaison (200) présentent respectivement, dans une direction tangentielle et/ou le long de leur direction d'extension principale, une extension qui correspond à un segment d'anneau circulaire.

4. Section de tour (101) selon au moins l'une quelconque des revendications précédentes, **caractérisée en ce que** les logements (210) sont réalisés en tant que trous de passage et/ou en tant que trous borgnes.

5. Section de tour (101) selon au moins l'une quelconque des revendications précédentes, **caractérisée en ce que** les deux rangées sont espacées l'une de l'autre dans la direction radiale, et/ou **caractérisée en ce que** la ou les rangée(s) est ou sont orientée(s) de manière rectiligne ou tangentielle.

6. Section de tour (101) selon au moins l'une quelconque des revendications précédentes, dans laquelle la surface avant (203) de la surface de fixation (201) est disposée sensiblement en vis-à-vis, et/ou dans laquelle la surface avant (204) de la surface de liaison (202) est disposée sensiblement en vis-à-vis, et/ou dans laquelle les deux surfaces latérales (205) sont sensiblement en vis-à-vis l'une de l'autre et/ou de préférence sont disposées de manière sensiblement radiale et/ou verticale.

7. Section de tour (101) selon au moins l'une quelconque des revendications précédentes, **caractérisée en ce que**, dans l'état de montage, la surface de liaison (202) et la contre-surface (204) sont disposées de manière sensiblement parallèle l'une à l'autre, et/ou **caractérisée en ce que**, dans l'état de montage, une direction d'extension principale de la surface de liaison (202) et/ou une direction d'extension principale de la contre-surface (204) et/ou une direction d'extension principale de la surface de fixation (201) et/ou une direction d'extension principale de la surface avant (203) sont disposées de manière sensiblement tangentielle, et/ou **caractérisée en ce que** la surface de fixation (201) et la surface avant (203) sont disposées de manière sensiblement coaxiale l'une par rapport à l'autre et/ou la surface avant (203) est réalisée de manière sensiblement rectiligne.

8. Section de tour (101) selon au moins l'une quelconque des revendications précédentes, **caractérisée en ce que** la surface de fixation (201) et/ou la surface avant (203) et/ou la surface de liaison (202) et/ou la surface avant (204) et/ou les deux surfaces latérales (205) ne sont pas disposées dans le même plan, et/ou **caractérisée en ce que** la surface de fixation (201) et/ou la surface avant (203) et/ou la surface avant (204) et/ou les deux surfaces latérales (205) sont exemptes de logements (210) et/ou **caractérisée en ce que** la surface de fixation (201) présente une extension tangentielle plus grande que celle de la surface avant (203) et/ou l'élément de liaison (200) présente un ou plusieurs prolongements de lèvre (206') dans une direction tangentielle.

9. Section de tour (101) selon au moins l'une quelconque des revendications précédentes, **caractérisée en ce que** les éléments de liaison (200) sont espacés de manière équidistante les uns des autres dans la direction circonférentielle, et/ou **caractérisée en ce que** les éléments de liaison (200) sont reliés par liaison de matière, en particulier sont soudés, à la surface périphérique de la section de tour (101).

10. Partie d'une tour d'une éolienne (100), comprenant deux sections de tour (101) selon au moins l'une quelconque des revendications précédentes, qui sont reliées entre elles par l'intermédiaire de moyens de fixation disposés dans les logements (210) des deux sections de tour (101).

11. Tour d'une éolienne (100), comprenant au moins une partie d'une tour selon la revendication précédente, et/ou au moins une section de tour (101) selon au moins l'une quelconque des revendications précédentes 1-9.

12. Éolienne (100), comprenant au moins une tour selon la revendication précédente, et/ou au moins une partie d'une tour selon la revendication 10, et/ou au moins une section de tour (101) selon au moins l'une quelconque des revendications 1-9.

13. Procédé de fabrication d'une section de tour (101) d'une éolienne (100), comprenant :
- la mise à disposition d'une section de tour (101), **caractérisé par**
- la disposition d'un élément de liaison sur une surface périphérique de la section de tour (101) selon au moins l'une quelconque des revendications 1-9.

14. Procédé selon la revendication précédente, comprenant :
- de préférence le transport de la section de tour (101) d'un premier emplacement de montage à un deuxième emplacement de montage,
- de liaison de la section de tour à une autre section de tour qui présente de préférence une extension axiale plus importante.

15. Procédé de liaison de sections de tour (101) d'une éolienne (100),
**caractérisé par** :
- la disposition de deux sections de tour (101) selon au moins l'une quelconque des revendications 1-9 l'une au-dessus de l'autre,
- la liaison des deux sections de tour (101) en disposant des éléments de fixation (300) dans les logements (210) des éléments de liaison (200) des deux sections de tour (201).
